# EUROPÄISCHE PATENTSCHRIFT

(11) **EP 1 372 400 B1**
(45) Veröffentlichungstag und Bekanntmachung des Hinweises auf die Patenterteilung: **19.10.2005**
(21) Anmeldenummer: 02712610.1
(22) Anmeldetag: 04.04.2002
(51) Int. Cl.: A21C 13/02

(54) **VORRICHTUNG ZUR BILDUNG EINES TEIGSTRANGES**
DEVICE FOR FORMING A DOUGH STRAND
DISPOSITIF POUR FORMER UNE BANDE DE PATE

(30) Priorität: 04.04.2001 AT 5432001
(43) Veröffentlichungstag der Anmeldung: 02.01.2004
(73) Patentinhaber: König Maschinen Gesellschaft mbH, 8045 Graz (AT)
(72) Erfinder: BARROCHE-HEINRICH, Wilfried, A-8181 Mitterdorf/Raab (AT); LAMBAUER, Peter, A-8073 Feldkirchen (AT)
(74) Vertreter: Wildhack, Helmut
(86) Internationale Anmeldenummer: PCT/AT2002/000104
(87) Internationale Veröffentlichungsnummer: WO 2002/080683

(56) Entgegenhaltungen:
- EP-A- 0 570 113
- EP-A- 0 572 210
- DE-A- 2 701 444
- FR-A- 2 306 432
- US-A- 5 427 515
- US-A- 5 733 583
- US-A- 5 919 495

## Beschreibung

Die Erfindung bezieht sich auf eine Vorrichtung zur Bildung eines Teigstranges aus einer, vorzugsweise großvolumigen, Teigmasse, mit einem Behälter zur Aufnahme der Teigmasse, der unten mit einer Auslauföffnung für den Teig versehen ist, an die zwei parallel zueinander ortsfest angeordnete, gegensinnig im Sinne einer Bewegung des Teiges nach unten taktweise angetriebene Wellen angeschlossen sind, die mit auf den Teig einwirkenden Profilierungen in Form einer pro Welle geraden Anzahl von Stemarmen versehen sind.

Eine derartige Vorrichtung ist aus AT 283235 B bekannt.

In Bäckereien besteht häufig die Anforderung, aus einer Teigmasse einen Teigstrang zu bilden. Zumeist hat diese Teigmasse ein großes Volumen, bedingt durch die Größe des Kneters, mit welchem die Teigmasse behandelt wurde. Gebräuchliche große Volumina sind etwa 80 bis 240 kg. Zur Bildung solcher Teigstränge ist es bekannt, aus der Teigmasse mittels hin und hergehender Messer Streifen abzutrennen, welche einander überlappend aneinandergereiht werden und dadurch ein kontinuierliches Teigband bilden. An den Überlappungsstellen hat dieses Teigband aber keine einheitliche Dicke, sodass eine Nachbearbeitung erforderlich ist, was eine weitere unerwünschte Beanspruchung des Teiges bedingt.

Weiters ist es bekannt, den Teig durch eine Düse auszupressen, wobei der Düsenquerschnitt den Querschnitt des herzustellenden Teigstranges bestimmt. Auch diese Vorgangsweise hat den Nachteil hoher Teigbelastungen.

Es ist schließlich bekannt (FR-2 306 432),aus einem großen Teigvolumen durch bewegte, profilierte Walzenpaare ein kontinuierliches Teigband zu formen. Auch dabei entstehen aber unerwünschte hohe Teigbelastungen.

Die Erfindung setzt sich zur Aufgabe, solche hohe Teigbelastungen zu vermeiden und einen Teigstrang mit zumindest annähernd gleichmäßiger Dicke herzustellen. Die Erfindung löst diese Aufgabe, ausgehend von der eingangs erwähnten bekannten Ausbildung, durch die im kennzeichendem Teil von Anspruch 1 angegebenen Massnahmen. Erfolgt nun ein Schritt der taktweisen Drehbewegung der beiden Wellen, so wird ein Teigstrang der im Behälter befindlichen Teigmasse durch die nachfolgenden Stemarme abgetrennt und nach unten auf das gerade unter den beiden Wellen befindliche Ablegeband abgelegt. Dieser Teigstrang bleibt in Verbindung mit der Teigmasse im Behälter, da durch die neu geöffnete, von den Ausschnitten der Sternarme gebildete Lücke, die jedoch nur am anderen Sternwellenende angeordnet ist, Teig nachfließt, und zwar derart, dass er sich an den abgelegten Teigstrang anschließt. Der bei der nächsten drehenden Weiterschaltung der Wellen abgelegte Teigstrang schließt an die zuvor abgelegte Teigstranglänge an, usw. Die einzelnen, aneinander anschließenden Teigstrangabschnitte gelangen auf die Ablegebänder. Durch deren auf die taktweise Drehbewegung der Wellen abgestimmte hin- und hergehende Bewegung wird die gleichsam mäanderförmige Auslaufform des von dem Stemwellenpaar gelieferten Teigstranges in eine kontinuierliche, geradlinig verlaufende Teigstrangform umgeformt, die der weiteren Verarbeitung zugeführt werden kann. Gemäß einer bevorzugten Ausführungsform der Erfindung erfolgt dies mittels eines unter den beiden Ablegebändem angeordneten, kontinuierlich zur Umlaufbewegung angetriebenen Abfuhrbandes.

Bei sinnvoller Abstimmung der Größe der Ausschnitte auf die Wellenverdrehung lässt sich ohne Schwierigkeiten eine weitgehend gleichmäßige Stärke des hergestellten Teigstranges erzielen.

Aus konstruktiven Gründen ist es zweckmäßig, die beiden Ablegebänder auf gleicher Höhe anzuordnen, derart, dass sie an ihren einander zugewandten Enden in Abstand voneinander liegen. Dieser Abstand bildet eine Durchtrittstelle für den Teigstrang zwischen den beiden Ablegebändem zum Abfuhrband. Vorzugsweise ist dieser Abstand zumindest so groß wie die Dicke des herzustellenden Teigstranges, um eine Quetschung des Teigstranges zwischen den beiden Abtegebändem zu vermeiden. Ferner ist gemäß einer bevorzugten Ausführungsform der Erfindung die Anordnung so getroffen, dass jedes Ablegeband zumindest so lang ist wie der Abstand der an den beiden Enden angeordneten Ausschnitte voneinander (in Achsrichtung der Wellen gemessen) beträgt. Dadurch schließen die über die Ausschnitte der Stemarme den Ablegebändem zugeführten Teigstrangabschnitte problemlos an jenen Teigstrangabschnitt an, welcher bei der Drehbewegung der Wellen auf das Ablegeband abgelegt wird.

Die gerade Anzahl der Stemarme jeder Welle beträgt gemäß einer bevorzugten Ausführungsform der Erfindung vier, was den Vorteil hat, dass in der aufeinander zu gerichteten, in der Regel horizontalen, Stellung eines Sternarmpaares, in welcher dieses den Teigdurchfluss über die Sternarmlänge absperrt, die nachfolgenden Stemarme vertikal nach oben ragen und dadurch den Nachfluss des Teiges zur vom jeweiligen Ausschnitt gebildeten Öffnung nicht behindern.

Die Ausschnitte der Stemarme gehen gemäß einer bevorzugten Ausführungsform der Erfindung von den von der Wellenachse entfernten Rändern der Sternarme aus. Dies ist konstruktiv einfacher als achsnahe Lücken in den Stemarmen und gibt darüber hinaus die Möglichkeit, die Ausschnitte jeweils zweier Stemarme, die den Teigdurchfluss im mittigen Bereich der Auslauföffnung des Behälters absperren, so anzuordnen, dass diese beiden Ausschnitte gemeinsam eine Öffnung bilden, deren Größe der Summe der beiden Ausschnitte entspricht. Vorzugsweise hat jeder Ausschnitt Rechteckform und die einzelnen Ausschnitte sind jeweils gleich groß, um die Taktzeiten gleich zu halten.

Beide Stemarmwellen sind zweckmäßig von einem gemeinsamen Motor angetrieben, um eine möglichst synchrone Bewegung zu gewährleisten. Hingegen kann erfindungsgemäß für jedes Ablegeband ein eigener Motor für die Umlaufbewegung vorgesehen sein, der mit dem Ablegeband mitlaufen kann. Der Antrieb der Umlaufbewegung der beiden Ablegebänder kann daher unabhängig voneinander eingestellt bzw. geregelt werden, um sich an die jeweils vorliegenden Gegebenheiten besser anpassen zu können. Zweckmäßig sind beide Ablegebänder in einem gemeinsamen Rahmen gehalten, der durch einen Antrieb in Achsrichtung der Wellen hin und her bewegbar ist. Dies gewährleistet, dass der durch den erwähnten Abstand zwischen den beiden Ablegebändern gebildeten Spalt konstant bleibt, jedoch kann die Anordnung so getroffen sein, dass diese Spaltbreite einstellbar ist.

Weitere Kennzeichen und Vorteile der Erfindung ergeben sich aus der vorliegenden Beschreibung eines Ausführungsbeispieles, welches in der Zeichnung schematisch dargestellt ist.

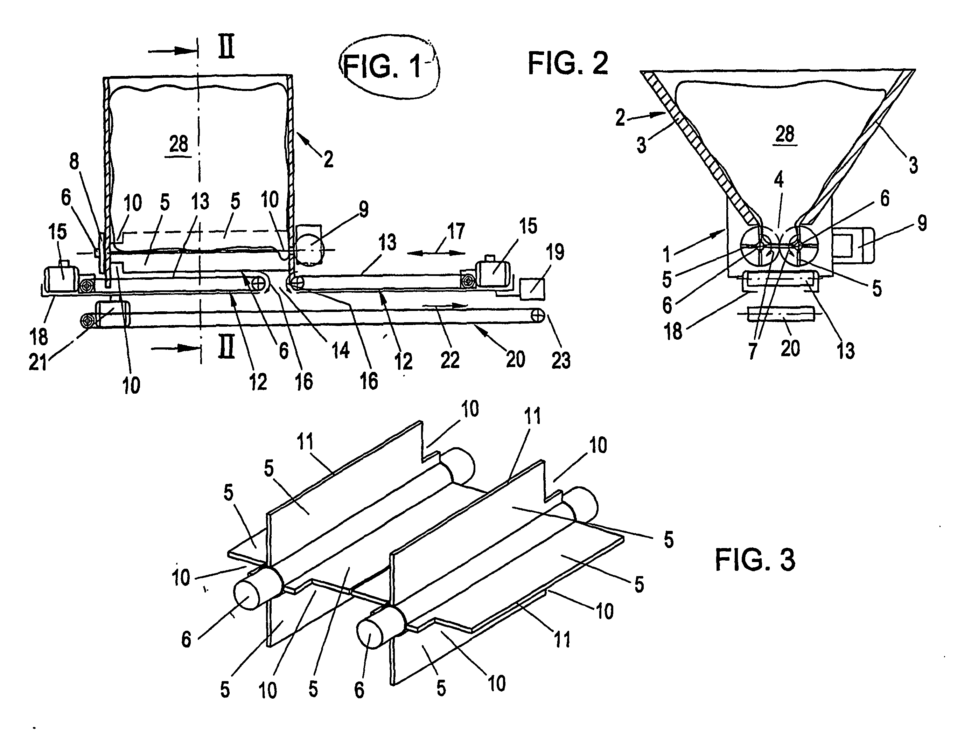

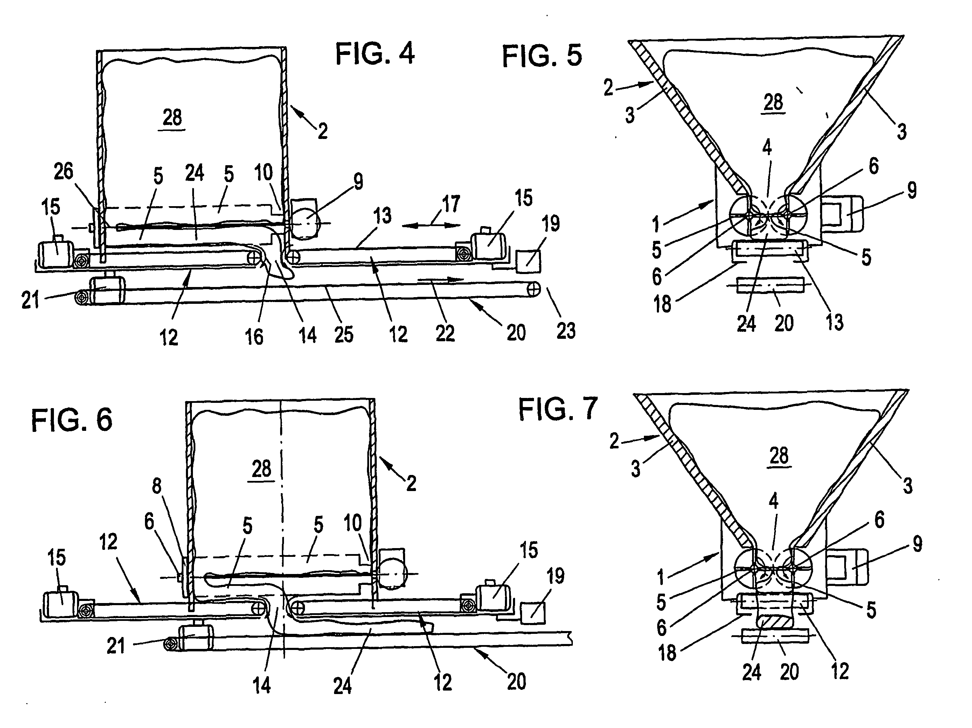

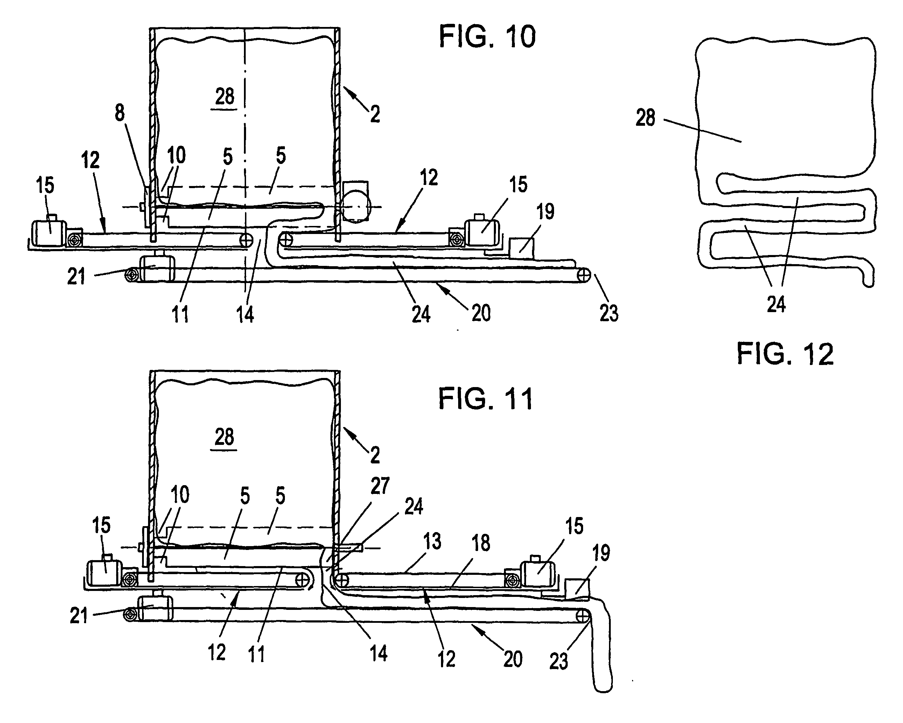

Fig. 1 zeigt die Vorrichtung im Vertikalschnitt. Fig. 2 ist ein Schnitt nach der Linie II - II. Fig. 3 zeigt in axonometrischer Darstellung die beiden Sternwellen in größerem Maßstab. Die Fig. 4 bis 11 zeigen in Schnitten ähnlich den Fig. 1 und 2 die Vorrichtung in verschiedenen Betriebsphasen. Fig. 12 zeigt schematisch die Ablegung der einzelnen Abschnitte des Teigstranges.

Die Vorrichtung hat ein Gestell 1, welches einen Behälter 2 zur Aufnahme des zu verarbeitenden Teiges trägt. Dieser Behälter 2 hat ein großes Volumen, etwa 80 bis 240 kg, um die gesamte von einem Kneter zuvor bearbeitete Teigmasse 28 aufnehmen zu können. Der Behälter 2 hat geneigt angeordnete Seitenwände 3 (Fig. 2), sodass sich eine Trichterform ergibt, deren Auslauföffnung 4 unten liegt. An diese Auslauföffnung 4 schließen zwei mit Stemarmen 5 versehene, im Gestell 1 gelagerte Wellen 6 derart an, dass in der in Fig. 2 dargestellten Stellung der beiden Wellen 6 der Teigausfluss aus der Auslauföffnung 4 durch zwei einander zugewendete Stemarme 5 über einen Großteil der axialen Länge der beiden Wellen 6 abgeschlossen ist. Die beiden Wellen 6 sind miteinander zur gegenläufigen Umlaufbewegung (Pfeile 7) derart angetrieben, dass bei Drehung der beiden Wellen 6 sich eine Förderung des Teiges aus der Auslauföffnung 4 nach unten ergibt. Beide Wellen 6 sind durch auf sie aufgekeilte Zahnräder 8 (Fig. 1) so gekoppelt, dass sie von einem einzigen Motor 9 zur Drehbewegung angetrieben werden können, und zwar taktweise bzw. intermittierend, d.h. mit zwischen den einzelnen Bewegungsschritten bestehenden Stillstandsphasen, in denen die beiden Wellen 6 die in Fig. 2 dargestellte Stellung einnehmen, in denen der Auslauf des Teiges aus der Auslauföffnung 4 über den Großteil der axialen Länge der Wellen 6 unterbrochen ist.

Wie Fig. 3 zeigt, ist jede Welle 6 mit vier Sternarmen 5 versehen, die um gleiche Winkel, also 90°, gegeneinander versetzt sind. Jeder Stemarm 5 läuft jedoch nicht über die gesamte axiale Länge der Welle 6 durch, sondem hat an einem Stimende des Stimarmes einen Ausschnitt 10, der von jenem Rand 11 des jeweiligen Stemarmes 5 ausgeht, welcher parallel zur Achse der Welle 6 liegt. Jeder Ausschnitt 10 hat Rechteckform und die einzelnen Ausschnitte 10 sind an den Stemarmen 5 der betreffenden Welle 6 so alternierend angeordnet, dass ein Ausschnitt 10 am rechten Stimende der Welle 6 (bezogen auf die Darstellung in Fig. 1) einem Ausschnitt 10 am linken Stimende derselben Welle 6 folgt, wenn die Welle 6 in Pfeilrichtung 7 (Fig. 2) gedreht wird. Ferner sind die Ausschnitte 10 an den beiden Wellen 6 so angeordnet, dass jeweils zwei Ausschnitte 10 einander gegenüber liegen, wenn die Stemarme 5 die Stellung nach Fig. 2 erreichen. Die beiden Ausschnitte 10 der beiden Wellen 6 bilden dann eine gemeinsame Öffnung, durch welche der Teig aus dem Behälter 2 nach unten fließen kann.

Der aus dem Behälter 2 durch dessen Auslauföffnung 4 nach unten austretende Teig gelangt auf das obere Trum 13 des einen von zwei auf gleicher Höhe liegenden Ablegebändem 12, die voneinander in horizontalem Abstand angeordnet sind, sodass zwischen den beiden einander zugewandten Enden der beiden Ablegebänder 12 ein einen Spalt 14 bildender Abstand verbleibt, der zumindest so groß ist, wie die Dicke des herzustellenden Teigstranges. Die beiden Ablegebänder 12 sind durch je einen Motor 15 angetrieben, und zwar mit einander entgegengesetzter Umlaufrichtung (Pfeile 16). Die beiden Ablegebänder 12 sind in Richtung des Doppelpfeiles 17 (Fig. 1) hin und her verschiebbar, und zwar so weit, dass der Spalt 14 abwechselnd unter eine der beiden von den Ausschnitten 10 gebildete Öffnung gelangt. Hiezu sind die beiden Ablegebänder 12 in einem gemeinsamen Rahmen 18 gehalten, der in Fig. 1 nur schematisch dargestellt ist, und durch einen Antrieb 19, z.B. einen pneumatisch oder hydraulisch betriebenen, doppelt wirkenden Zylinder, in Doppelpfeilrichtung 17 hin und her bewegbar ist. Selbstverständlich ist dieser Rahmen 18 so gestaltet, dass er den Durchgang des Teigstranges durch den Spalt 14 nicht behindert. Im Rahmen 18 können die beiden Ablegebänder 12 so angeordnet sein, dass sich die Breite des Spaltes 14 verändern lässt, um sich an unterschiedliche Dicken des herzustellenden Teigstranges anpassen zu können. Gegebenenfalls können die beiden Ablegebänder 12. jedoch auch unabhängig voneinander horizontal verschiebbar sein, sofeme nur die später erwähnte Aufnahme des mäanderförmig von den Stemarmen 5 bzw. deren Ausschnitten 10 nach unten fließenden Teigstranges auf den Ablegebändem 12 gewahrt bleibt.

Die beiden Ablegebänder 12 bilden zusammen einen kontinuierlichen Teigstrang, der der weiteren Verarbeitung zugeführt werden kann. Zweckmäßig erfolgt dies nicht direkt, sondem die beiden Ablegebänder 12 legen die von ihnen aufgenommenen Teigstrangabschnitte auf ein unterhalb der beiden, von endlosen Bändern gebildeten Ablegebänder 12 angeordnetes Abfuhrband 20 ab, welches ebenfalls von einem endlosen Band gebildet ist. Das Abfuhrband 20 ist durch einen Motor 21 zur kontinuierlichen Umlaufbewegung in Richtung des Pfeiles 22 angetrieben und führt den hergestellten Teigstrang der weiteren Verarbeitung an der Stelle 23 zu.

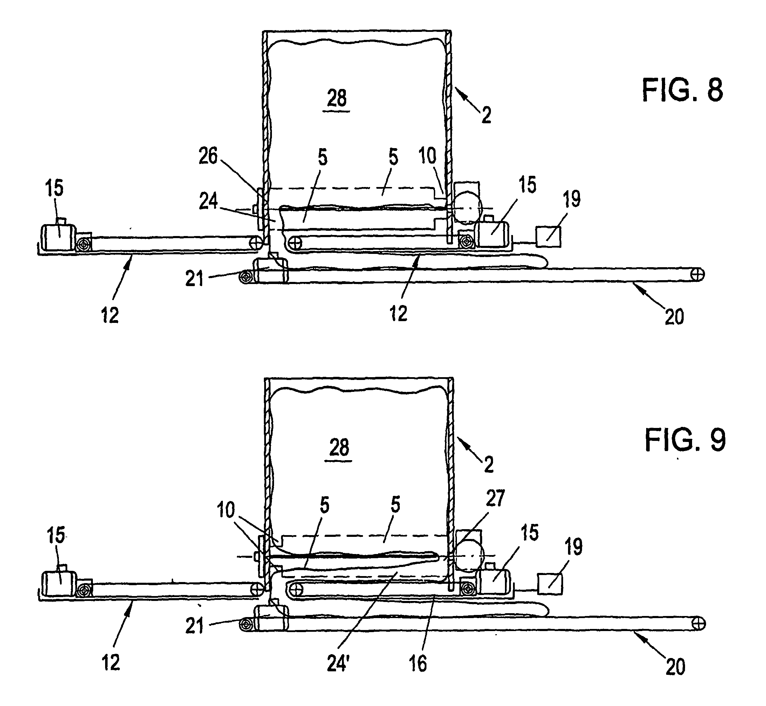

Die Vorrichtung arbeitet wie folgt:
Es sei ausgegangen von einer Stellung der Stemarme 5 der Wellen 6 und der beiden Ablegebänder 12 nach den Fig. 4 und 5. In dieser Stellung kann die im Behälter 2 befindliche Teigmasse 28 nur durch die links in Fig. 4 liegende Öffnung 26 ausfließen, die von den beiden einander zugewendeten Ausschnitten 10 der beiden Stemarme 5 der Wellen gebildet ist, welche Stemarme 5 ansonsten den Teigdurchgang nach unten absperren. Dadurch entsteht ein Teigstrangabschnitt 24, welcher auf das unter den beiden Wellen 6 angeordnete linke Ablegeband 12 gelangt. Durch dessen Umlaufbewegung (Pfeil 16) wird der auf das Ablegeband 12 abgelegte Teigstrang 24 laufend dem Spalt 14 zugeführt und durch diesen Spalt 14 hindurch auf das obere Trum 25 des Abfuhrbandes 20 abgelegt. Zugleich wird der die beiden Ablegebänder 12 enthaltende Rahmen 18 durch seinen Antrieb 19 nach links (Fig. 4) verschoben, sodass der Spalt 14 allmählich in die Stellung nach Fig. 6 gelangt. Es ist ersichtlich, dass dann das Abfuhrband 20 bereits einen Teil des Teigstranges 24 aufgenommen hat. Während die beiden Wellen 6 mit ihren Stemarmen 5 still stehen, bewegt sich der Rahmen 18 mit den beiden Ablegebändem 12 weiter nach links (Fig. 6) und erreicht schließlich die linke Endposition nach Fig. 8. Sobald diese Position erreicht ist, werden die beiden Wellen 6 um 90° in Pfeilrichtung 7 (Fig. 2) weitergedreht. Diese taktweise Weiterschaltung erfolgt so rasch, dass ein Teigstrangstück 24' über die Länge der Stemarme 5 während dieser Sternarmdrehung auf ein Ablegeband 12 abgelegt wird, aber nun auf das rechte Ablegeband 12 (Fig. 9). Zugleich bewirkt die erwähnte Weiterdrehung der Wellen 6 um 90°, dass die Ausschnitte 10, welche früher (Fig. 4, 6) eine am linken Ende der Wellen 6 liegende Öffnung 26 für den Teigdurchtritt nach unten bildeten, nunmehr in die vertikale Lage (Fig. 1) gelangen, sodass diese Öffnung 26 geschlossen wird und dafür eine am rechten Stimende der Wellen 6 befindliche gleichartige Öffnung 27 (Fig. 9) geöffnet wird. Die beiden Ablegebänder 12 bewegen sich nun nach rechts (Fig. 10), wobei das rechte Ablegeband 12 durch seine Umlaufbewegung (Pfeil 7, Fig. 2) den ihm laufend durch die Öffnung 27 zufließenden Teigstrang auf das Abfuhrband 20 ablegt. Sobald die Stellung nach Fig. 11 erreicht ist, in welcher der von den beiden Ablegebändem 12 gebildete Spalt 14 seine rechte Endposition erreicht hat, in welcher er unter der Öffnung 27 liegt, ist die Stellung nach Fig. 1 erreicht. Durch ihre taktweise Weiterschaltung werden die beiden Wellen 6 nun wieder um 90° weiter gedreht, wobei ein neuer Teigstrangabschnitt auf das linke Ablegeband 12 abgelegt wird, in analoger Weise wie dies in bezug auf Fig. 9 beschrieben wurde. Die beiden Ablegebänder 12 werden sodann gemeinsam nach links (Fig. 11) verschoben, sodass der durch die Öffnung 27 austretende Teigstrang 24 allmählich auf das rechte Ablegeband 12 abgelegt wird, welches ihn laufend auf das darunter befindliche Abfuhrband 20 ablegt. Sobald die Stellung nach Fig. 8 erreicht ist, ist ein Zyklus vollendet und es beginnt ein neuer Arbeitszyklus.

Wie ersichtlich, ist die Breite des Spaltes 14 zwischen den beiden Ablegebändem 12 zumindest gleich groß, vorzugsweise größer als die Dicke des herzustellenden Teigstranges. Diese Dicke lässt sich auch dadurch variieren, dass die Größe der Ausschnitte 10 verändert wird. Dies kann durch Austausch der Wellen 6 durch Wellen 6 mit entsprechend größeren oder kleineren Ausschnitten 10 erfolgen oder gegebenenfalls auch durch an den Wellen 6 angeordnete verstellbare und in der eingestellten Stellung fixierbare Schieber. In analoger Weise lässt sich die Dicke des Teigstranges variieren durch Vergrößerung oder Verringerung der Zeitdauer, welche verstreicht, bis die jeweils nachfolgenden Stemarme 5 in die Verschlussstellung gebracht sind. Durch eine gegenseitige Anpassung dieser Möglichkeiten kann ein Teigstrang mit im wesentlichen konstanter Dicke hergestellt werden.

In Fig. 12 ist schematisch der erwähnte Ausfluss des Teigstranges 24 aus der im Behälter 2 befindlichen Teigmasse 28 dargestellt. Es ist ersichtlich, dass die zuvor beschriebene Ablage des Teigstranges 24 zunächst in Mäanderform erfolgt, jedoch durch die Funktion der beiden Ablegebänder 12 die Mäanderform in eine gestreckte Form des Teigstranges 24 übergeführt wird.

## Patentansprüche

1. Vorrichtung zur Bildung eines Teigstranges aus einer, vorzugsweise großvolumigen, Teigmasse (28), mit einem Behälter (2) zur Aufnahme der Teigmasse (28), der unten mit einer Auslauföffnung (4) für den Teig versehen ist, an die zwei parallel zueinander ortsfest angeordnete, gegensinnig im Sinne einer Bewegung des Teiges nach unten taktweise zur Drehbewegung angetriebene Wellen (6) angeschlossen sind, die mit auf den Teig einwirkenden Profilierungen in Form einer pro Welle (6) geraden Anzahl von Stemarmen (5) versehen sind, und in aufeinander zu gerichteter Lage den Teigdurchfluss nach unten über den Großteil der axialen Länge der Wellen (6) absperren, **dadurch gekennzeichnet, dass** diese Stemarme (5) jeder Welle jedoch an den Wellenenden alternierend mit Ausschnitten (10) um den Durchfluss des Teiges während der Pausen der taktweisen Drehbewegung der Wellen (6) zu ermöglichen versehen sind und dass unter diesen Wellen (6) zwei Ablegebänder (12) in Längsrichtung der Wellen (6) und im Abstand voneinander angeordnet sind, die zu einer gegenläufigen Umlaufbewegung und zu einer, vorzugsweise gemeinsamen, hin und her gehenden Verschiebung in ihrer Längsrichtung antreibbar sind.

2. Vorrichtung nach Anspruch 1, **dadurch gekennzeichnet, dass** unter den beiden Ablegebändem (12) ein kontinuierlich zur Umlaufbewegung angetriebenes Abfuhrband (20) angeordnet ist.

3. Vorrichtung nach Anspruch 1 oder 2, **dadurch gekennzeichnet, dass** jedes Ablegeband (12) zumindest so lang ist, wie der Abstand der an den beiden Wellenenden angeordneten Ausschnitte (10) voneinander beträgt.

4. Vorrichtung nach Anspruch 1, 2 oder 3, **dadurch gekennzeichnet, dass** die beiden Ablegebänder (12) auf gleicher Höhe und an ihren einander zugewendeten Enden zur Bildung eines Spaltes (14) im Abstand voneinander liegen.

5. Vorrichtung nach einem der Ansprüche 1 bis 4, **dadurch gekennzeichnet, dass** die Ausschnitte (10) jeweils zweier miteinander zusammenwirkender Stemarme (5) so angeordnet sind, dass die beiden Ausschnitte (10) jeweils eine gemeinsame Öffnung (26 bzw. 27) bilden.

6. Vorrichtung nach Anspruch 4, **dadurch gekennzeichnet, dass** der vom Spalt (14) gebildete Abstand zumindest so groß ist wie die Dicke des herzustellenden Teigstranges (24).

7. Vorrichtung nach einem der Ansprüche 1 bis 6, **dadurch gekennzeichnet, dass** jede Welle (6) vier Sternarme (5) hat.

8. Vorrichtung nach einem der Ansprüche 1 bis 7, **dadurch gekennzeichnet, dass** jeder Ausschnitt (10) von jenem Rand (11) des Stemarmes (5) ausgeht, welcher von der Achse der Welle (6) entfernt ist.

9. Vorrichtung nach einem der Ansprüche 1 bis 8, **dadurch gekennzeichnet, dass** die Ausschnitte (10) Rechteckform aufweisen und jeweils gleich groß sind.

10. Vorrichtung nach einem der Ansprüche 1 bis 9, **dadurch gekennzeichnet, dass** beide Wellen (6) von einem gemeinsamen Motor (9) angetrieben sind.

11. Vorrichtung nach einem der Ansprüche 1 bis 10, **dadurch gekennzeichnet, dass** für jedes Ablegeband (12) ein eigener Motor (15) für die Umlaufbewegung vorgesehen ist.

12. Vorrichtung nach einem der Ansprüche 1 bis 11, **dadurch gekennzeichnet, dass** beide Ablegebänder (12) in einem gemeinsamen Rahmen (18) gehalten sind, der durch einen Antrieb (19) in Achsrichtung der Wellen (6) hin und her bewegbar ist.

## Revendications

1. Dispositif pour former une bande de pâte d'une masse de pâte (28), préférablement de grand volume, comprenant un récipient (2) pour recevoir la masse de pâte (28), qui est pourvu en bas d'un orifice de décharge (4) pour la pâte, auquel deux arbres (6) disposés parallèlement l'un à l'autre d'une manière stationnaire se joignent, qui sont entraînés en cadence en sens d'un mouvement de la pâte en bas, qui sont pourvus des profilages agissant à la pâte en forme d'un nombre pair par arbre (6) des bras étoilés (5), et qui obturent, dans une position adjacente les uns aux autres, le passage de la pâte en bas sur la majorité de la longueur axiale des arbres (6), **caractérisé en ce, que** ces bras étoilés (5) de chaque arbre sont, cependant, pourvus aux bouts des arbres des découpures (10) alternantes pour rendre possible le passage de la pâte pendant les arrêts du mouvement rotatif en cadence des arbres (6), et que deux courroies de dépôt (12) sont disposées sous ces arbres (6) en direction longitudinale des arbres (6) et espacées l'une de l'autre, qui peuvent être entraînées à un mouvement rotatif en sens opposés et à un déplacement de va-et-vient, préférablement en commun, dans sa direction longitudinal.

2. Dispositif selon la revendication 1, **caractérisé en ce, qu'**une courroie de décharge (20) continuellement entraînée à un mouvement rotatif est disposée sous les deux courroies de dépôt (12).

3. Dispositif selon la revendication 1 ou 2, **caractérisé en ce, que** chaque courroie de dépôt (12) est au moins si longue comme la distance entre les deux découpures (10) situées aux deux bouts d'arbres l'une de l'autre.

4. Dispositif selon la revendication 1, 2 ou 3, **caractérisé en ce que**, les deux courroies de dépôt (12) sont au même niveau et sont espacées l'une de l'autre à ses bouts adjacents l'un à l'autre pour former une fente (14).

5. Dispositif selon une quelconque des revendications 1 à 4, **caractérisé en ce, que** les découpures (10) des deux bras étoilés (5) respectivement coopérants sont disposées de manière, que les deux découpures (10) forment ensemble une ouverture (26 ou 27) respective.

6. Dispositif selon la revendication 4, **caractérisé en ce, que** la distance formée par la fente (14) est au moins si grande comme l'épaisseur de la bande de pâte (24) à produire.

7. Dispositif selon une quelconque des revendications 1 à 6, **caractérisé en ce, que** chaque arbre (6) comprend quatre bras étoilés (5).

8. Dispositif selon une quelconque des revendications 1 à 7, **caractérisé en ce, que** chaque découpure (10) sorte de ce bord (11) du bras étoilé (5), qui est éloigné de l'axe de l'arbre (6).

9. Dispositif selon une quelconque des revendications 1 à 8, **caractérisé en ce, que** les découpures (10) ont une forme rectangulaire et sont chacune de même dimension.

10. Dispositif selon une quelconque des revendications 1 à 9, **caractérisé en ce, que** les deux arbres (6) sont entraînés par un moteur (9) en commun.

11. Dispositif selon une quelconque des revendications 1 à 10, **caractérisé en ce, que** pour chaque courroie de dépôt (12) un moteur (15) séparé pour le mouvement rotatif est prévu.

12. Dispositif selon une quelconque des revendications 1 à 11, **caractérisé en ce, que** les deux courroies de dépôt (12) sont tenues ensemble dans un cadre (18), qui peut être mû par un dispositif d'entraînement (19) dans les deux sens en direction axiale des arbres (6).

## Claims

1. Device for forming a dough strand from a dough mass (28), preferably of a large volume, comprising a container (2) for receiving said dough mass (28), which is provided at the bottom with an outlet opening (4) for the dough, to which two parallel and stationarily arranged shafts (6) are joining which are counter-rotationally driven in a cycled operation in the sense of a downwards motion of the dough, and which are provided with a profiling in the form of an even number of star arms (5) per shaft (6) acting onto said dough and which shut off the downward flow of dough over the majority of the axial length of the shafts (6) when in a position in which they extend towards each other, **characterised in that** these stem arms (5) of each shaft are, however, provided at the shaft ends alternatingly with cut-outs (10) to enable a flow of dough during the interruptions of the rotational motion in cycled operation of the shafts (6), and that two depositing belts (12) are arranged below these shafts (6) in longitudinal direction of the shafts (6) and spaced from one another, which may be driven to an opposing circulated movement and to a, preferably common, rocking displacement in their longitudinal direction.

2. Device according to claim 1, **characterised in that** a discharge belt (20) continuously driven to a circulated movement is arranged below the two depositing belts (12).

3. Device according to claim 1 or 2, **characterised in that** each depositing belt (12) is at least as long as the distance of the cut-outs (10), situated at the two shaft ends, is from each other.

4. Device according to claim 1, 2 or 3, **characterised in that** the two depositing belts (12) are on the same level and are spaced from one another at the ends which facing each other to from a gap (14).

5. Device according to any of claims 1 to 4, **characterised in that** said cut-outs (10) of respective two co-operating stern arms (5) are arranged in such a manner that the two cut-outs (10) form a respective opening (26 or 27) in common.

6. Device according to claim 4, **characterised in that** the distance formed by said gap (14) is at least as large as the thickness of the dough strand (24) to be produced.

7. Device according to any of claims 1 to 6, **characterised in that** each shaft (6) comprises four stem arms (5).

8. Device according to any of claims 1 to 7, **characterised in that** each cut-out (10) begins at that margin (11) of a stem arm (5) which is remote from the axis of the shaft (6).

9. Device according to any of claims 1 to 8, **characterised in that** said cut-outs are rectangular and are each of equal size.

10. Device according to any of claims 1 to 9, **characterised in that** both shafts (6) are driven by one motor (9) in common.

11. Device according to any of claims 1 to 10, **characterised in that** a separate motor (15) is provided for the circulated movement of each depositing belt (12).

12. Device according to any of claims 1 to 11, **characterised in that** both depositing belts (12) are held in common in a frame (18) which may be rocked by drive means (19) in axial direction of the shafts (6).
